# EUROPEAN PATENT SPECIFICATION

(11) **EP 1 257 993 B1**
(45) Date of publication and mention of the grant of the patent: **25.02.2009**
(21) Application number: 00989358.7
(22) Date of filing: 21.12.2000
(51) Int. Cl.: G09F 23/10, G09F 23/00, G07G 5/00

(54) **TARGET ADVERTISING FOR AN ELECTRONIC TRANSACTION USING A TRANSACTION PROCESSING CENTER**
GEZIELTE ANZEIGEN FÜR EINE ELEKTRONISCHE TRANSAKTION UNTER VERWENDUNG EINER TRANSAKTIONSVERARBEITUNGS-ZENTRALE
ANNONCE PUBLICITAIRE CIBLE POUR TRANSACTION ELECTRONIQUE A L'AIDE D'UN CENTRE DE TRAITEMENT TRANSACTIONNEL

(30) Priority: 30.12.1999 US 475884
(43) Date of publication of application: 20.11.2002
(73) Proprietor: PITNEY BOWES INC., Stamford, CT 06926 (US)
(72) Inventor: BREWSTER, William, H., Jr., Fairfield, CT 06482 (US); HEIDEN, Richard, W., Huntington, CT 06484 (US); KAYE, Stephen, M., Weston, CT 06883 (US); MALANDRA, Charles, R., Jr., Monroe, CT 06468 (US); PIERCE, Jeffrey, D., Sandy Hook, CT 06482 (US); RYAN, Frederick, W., Jr., Oxford, CT 06478 (US)
(74) Representative: HOFFMANN EITLE
(86) International application number: PCT/US2000/034759
(87) International publication number: WO 2001/050445

(56) References cited:
- DE-U1- 29 613 910
- JP-A- 08 016 928
- US-A- 6 129 274
- US-A- 6 141 654
- FOLEY J.: 'Market of one -- ready, aim, sell! -- Technology is helping companies treat their best customers like individuals again. The payoff - and the challenges-can be enormous' INFORMATION WEEK 17 February 1997, pages 1 - 5, XP002938578

## Description

This invention relates generally to methods of the delivery of advertisements, and in particular is directed to targeting of advertisements delivered through electronic transactions.

The present invention also relates to U. S. Patent Application No. 09/475, 431, filed December 30,1999 and published as WO 01 /50446 A1.

For several years, the Internet has been available for searching and collecting information. In the last two years, the Internet has exploded as a method of concluding electronic transactions. As the number of individuals and companies accessing the Internet has increased, so has the number of web sites available for accessing. Many companies have web sites, which provide information concerning available products and services as well as organizational information concerning the companies. Most recently, the security of communications over the Internet has increased to a level at which companies offer and individuals feel comfortable enough to conduct electronic transactions over the Internet. As a result, commercial transactions, such as purchasing tickets, ordering retail products, purchasing and selling stock and conducting banking transactions, are now concluded on a regular basis. Startup"dot com"companies are popping up with products and/or services never before imaginable as viable commercial endeavors.

For several years, on-line advertising on the Internet has been used as a source of revenue or a way to defer costs for Internet servers, browsers or web sites. Typically, on-line advertisements appear on a web page, in the form of a banner at the top or bottom of the page. When a user views a web page using a browser, such as Microsoft Internet Explorer or Netscape Navigator, a banner ad appears on the web page and the user has the option to find out more information concerning the advertisement by selecting, i. e. clicking on, the banner. This action causes the browser to retrieve a web site associated with the banner ad for display on the user's computer. Although banner advertising may be linked to the web site selected by the user, typically, such banner advertising is untargeted advertising, i. e., not directed to a specific potential customer base. However, the use of banner ads has limited value, because the individual accessing the web site may not be interested in the ad, and in fact, may totally disregard the ad and may even consider the banner ad to be a nuisance. In fact, programs are now available which run on a user's PC to filter banner ads and remove them from a web page before it is displayed on a user's screen.

US-A-4,734,865 describes an insertion machine having an audit trail and command processor. A data processor manages the processing of events.

US-A-5,819,241 describes a computer system for providing commercial advertisements, messages, coupons, or other types of information on letters, parcels, and other written communications to a receiver of the letter, parcel, or other written communications includes a processor coupled to the letter or parcel delivery network. The processor is configured to print or apply messages on letters or packages and to gather statistics regarding actions performed by the receivers of the communications; the processor is further configured to process the statistics to generate user data and to provide commercial advertisements to the receivers of letters and packages based on user data. The system also includes a processor coupled to the delivery network, and is configured to send advertisements to an apparatus to print or apply them on appropriate, targeted letters or packages during any of the phases of letter or parcel delivery, and to gather statistics regarding actions performed by the user. The processor will be configured to process statistics and to generate user data. The processor will further be configured to provide commercial advertisements to the user based on user data. The system is also used to calculate postage and apply postage indications to the letters or parcels.

In U. S. Patent No. 5,948,061, method and apparatus for targeting the delivery of advertisements over a network such as the Internet are disclosed. Statistics are compiled on individual users and networks and the use of the advertisements is tracked to permit targeting of the advertisements for individual users. In response to requests from affiliated sites, an advertising server transmits to people accessing the page of a site an appropriate one of the advertisements based upon profiling of users and networks.

In U. S. Patent No. 5,598,477, system and method for issuing and validating tickets through an electronic transaction is disclosed. The system includes a data processing system for receiving ticket request information and generating ticket information, which includes encrypted validating information. A local printing system receives the ticket information and prints the encrypted validating information on a ticket in machine-readable format. The ticket is then validated through a validating system that converts the encrypted validating information into a digital format, decrypts the validating information, tests the validating information to validate the ticket. The data processing system receives an itinerary from a purchaser, checks a reservation system to determine service availability and provides service availability information to the purchaser who selects appropriate services and submits ticket request information. The data processing system then generates ticket information including encrypted validating information and transmits the ticket information to the local printing system which prints a ticket having the encrypted validating information printed in a machine readable format.

It is known to print selected messages (sometimes referred to as ad slogans although such messages are not restricted to advertisements) along with a postal indicium. Generally, the message bears no relation to the postal indicium. In traditional postage meters employing either rotary drum or flat bed printing technology, the message was printed along with the postal indicium by including an additional printing die representative of the message. Examples of die based systems for printing messages are disclosed in U.S. Patent No. 5,168,804 and U.S. Patent No. 5,024,153. More recently, the postage meter industry has begun to incorporate digital (dot matrix) printing technology which obviates the need for dies as the digital printer may be supplied with suitable drive signals to effect printing of the message. Examples of digital printing technology based systems for printing messages are disclosed in U. S. Patent No. 4,831,554 and U. S. Patent No. 5,509,109.

Additionally, U. S. Patent No. 4,831,554 teaches a system that allows the postage meter manufacturer to broker the use of advertising space by third parties on the envelopes. In concept, a third party advertiser may wish to take advantage of the space on the outgoing envelopes from a particular postage meter user to advertise its own products and/or services. In this system, a message, the content of which originates from a third party, is stored electronically within the postage meter. The postage meter keeps a count of the number of times that the message is printed in conjunction with a postal indicium. This count is then used by the data center to provide a subsidy to the postage meter user during a subsequent billing cycle and is correspondingly used by the data center to invoice the third party advertiser.

Although this brokering system in U. S. Patent No. 4,831,554 represents a new business opportunity for postage meter manufacturers, it suffers from certain drawbacks and disadvantages. First, the third party advertiser cannot exercise any control over when the message is dispensed. Thus, if the message is time sensitive, then the relevance of the message may be lost after a certain date and the third party advertiser would be compelled to pay for advertising that was not effective. For example, advertisements directed to promotions that have expiration dates (rebate programs, concert tickets, limited time offers, etc.) are useless once the relevant time period has passed. Second, the third party advertiser cannot exercise any control over the number of messages dispensed. Thus, if the third party advertiser allocated a fixed advertising budget and accordingly only wanted to pay for a limited number envelopes containing the message, then the third party advertiser may be compelled to pay for advertising that was not wanted if the postage meter user generates increased mail volume over that which was anticipated. Third, the third party advertiser cannot exercise any control over the recipient of the message. Thus, the third party advertiser has no assurance that a target audience would be reached. For example, advertisements (e.g. sports related or hair loss, as examples) intended primarily for males may not be relevant if the recipient of the envelope from the postage meter user was a female. Fourth, the third party advertiser cannot exercise any control over the geographic reach of the message. Here again, the third party advertiser has no assurance that the target audience would be reached. For example, advertisements (e. g. local car dealership or cleaning service, as examples) intended for a certain limited geographic region would not be relevant if the recipient of the envelope from the postage meter user was located many miles away from the certain limited geographic region. As a related example, advertisements intended for the certain limited geographic region on envelopes originating from outside of the certain limited geographic region would not benefit from the increased good will of being associated with a sender in the certain limited geographic region.

There is a need for an improved system for advertising on Internet transactions, i. e. one in which the third party advertisers would be willing to pay higher fees resulting in an increased economic incentive for third party advertisers and Internet users to participate.

According to a first aspect of the invention, there is provided a transaction evidencing system, comprising: a first processor in operative communication with a printer for printing a document as part of an electronic transaction undertaken by a consumer respecting content provided by a content provider; a transaction processor in operative communication with the first processor, the transaction processor for processing electronic transactions respecting content provided by a plurality of content providers; a data center in operative communication with the transaction processing center, the first processor being located remotely from the data center and the transaction processor, the data center including a data center processor for processing a plurality of advertiser accounts, each of the plurality of advertiser accounts including respective ad data having message data and restriction data, each of the message data representative of a message, respectively, for printing on the document; the data center further including profile information about the consumer obtained during at least one prior electronic transaction in respect of content provided by at least one of the plurality of content providers; a control system in operative communication with the transaction processor, the data center processor and the first processor for: establishing a transaction session between the first processor and the transaction processor, for the electronic transaction at the first processor; obtaining the profile information; using the profile information and the restriction data from the plurality of advertiser accounts to identify a subset of messages available for printing on the document; and sending to the first processor data relating to the electronic transaction and at least one of the subset of messages to be printed with the document.

According to a second aspect of the invention, there is provided a method of operating a transaction evidencing system, the system including a first processor in operative communication with a printer for printing a document as part of an electronic transaction undertaken, by a consumer respecting content provided by a content provider, a transaction processor in operative communication with the first processor for processing electronic transactions respecting content provided by a plurality of content providers, and a data center in operative communication with the transaction processor, the first processor being located remotely from the data center and the transaction processing center, the data center including a third processor for processing a plurality of advertiser accounts, each of the plurality of advertiser accounts including respective ad data having message data and restriction data, each of the message data representative of a message, respectively, for printing on the document; the data center further including profile information about the consumer obtained during at least one prior electronic transaction in respect of content provided by at least one of the plurality of content providers; the method comprising the steps of: establishing a transaction session between the first processor and the transaction processor for the electronic transaction initiated by the consumer; obtaining the profile information; and using the profile information and the restriction data from the plurality of advertiser accounts to identify a subset of messages available for printing on the document.

According to a third aspect of the invention, there is provided a method of operating a transaction processing center, the transaction processing center in operative communication with a data center and a first processor, the data center including a second processor for processing a plurality of advertiser accounts, each of the plurality of advertiser accounts including respective ad data having message data and restriction data, each of the message data representative of a message, respectively, for printing on the document; the data center further including profile information about a consumer obtained during at least one prior electronic transaction in respect of content provided by at least one of a plurality of content providers; the first processor being remote from the data center and the transaction processing center and including a printer for printing a message on a document evidencing an electronic transaction to be undertaken by the consumer respecting content provided by one of the content providers, the method comprising the steps of: maintaining a server for processing electronic transactions respecting content provided by the plurality of content providers; obtaining information relating to the plurality of advertiser accounts; establishing a transaction session with the first processor respecting content provided by one of the content providers; receiving information included as part of the electronic transaction from the consumer; and using the profile information, the information included as part of the electronic transaction and the restriction data from the plurality of advertiser accounts to identify a subset of messages available for printing on the document.

Additional advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

The accompanying drawings, which are incorporated in and constitute a part of the specification, illustrate presently preferred embodiments of the invention, and together with the general description given above and the detailed description of the preferred embodiments given below, serve to explain the principles of the invention. As shown throughout the drawings, like reference numerals designate like or corresponding parts. In the drawings:
Fig. 1 is a simplified representation of a transaction evidencing system including a data center and a plurality of remotely located computer systems in electronic communication with the data center in which the present invention may be incorporated;
Fig. 2A is a front view of a transaction evidencing document in the form of a ticket that has been processed by the transaction evidencing system in accordance with an embodiment of the present invention;
Fig. 2B is a front view of a transaction evidencing document in the form of a receipt that has been processed by the transaction evidencing system in accordance with an embodiment of the present invention;
Fig. 3 is a detailed representation of a preferred embodiment of the transaction evidencing system in accordance with the present invention;
Fig. 4 is a detailed representation of an alternate embodiment of the transaction evidencing system in accordance with the present invention;
Fig. 5 is a flow chart showing the operation of the transaction evidencing system in accordance with an embodiment of the present invention; and
Fig. 6 is a schematic representation of an ad data file associated with a third party message to be printed on the transaction evidencing document by the transaction evidencing system in accordance with an embodiment of the present invention.

The following describes a system and methods for improving the effectiveness of third party advertising on printed documents, particularly those documents that are produced because of electronic transactions. Generally, this is accomplished by letting the third party advertisers establish restrictions or limits on the documents on which they would like to place their messages. The restrictions may be based upon user parameters (e. g., type of transaction, location of user/event or type of content), consumer parameters (e. g., location of consumer, demographics or other consumers with similar profiles), quantitative parameters (e. g., value of transaction or number of transactions) or some combination of the above.

In accordance with the following, a transaction evidencing system comprises a computer, a transaction processing center, a data center and a control system. The computer is in operative communication with a printer for printing evidence of a transaction, such as receipts and tickets. The transaction processing center includes a processor that is in operative communication with the computer, which is located remotely from the transaction processing center, and the data center. The transaction processing center processes electronic transactions initiated at the computer. The data center includes a processor that is in operative communication with the transaction processing center. The data center processor maintains databases used for identifying advertisement messages for the electronic transactions. The data center includes a plurality of user accounts and a plurality of advertiser accounts where each of the plurality of advertiser accounts includes respective ad data including message data and restriction data limiting the use of the message data. The control system is in operative communication with the data center and the computer and is for: (i) establishing a transaction session between the computer corresponding to one of the plurality of user accounts and the data center; (ii) obtaining information about the user; and (iii) using the user information and the restriction data from the plurality of advertiser accounts to identify message data available for printing along with the transaction evidencing document.

In an alternative embodiment, the data center function of the preferred embodiment may be downloaded at least in part such that the transaction processing center performs the target advertising process without the need for communicating with the data center for every electronic transaction.

One or more advertising messages may be automatically selected for printing on the transaction evidencing document. Alternatively, a subset of targeted advertising messages may be selectable by the user, by the data center or by the advertiser, or by some combination of all three. Additionally, if the transaction is paid for by credit card, the credit card processor may selectively target a particular advertising message based on the credit card processor's information from previous transactions using the credit card.

The following also describes a method of operating a transaction evidencing system and a method of operating a data center and transaction processing center concerning target advertising.

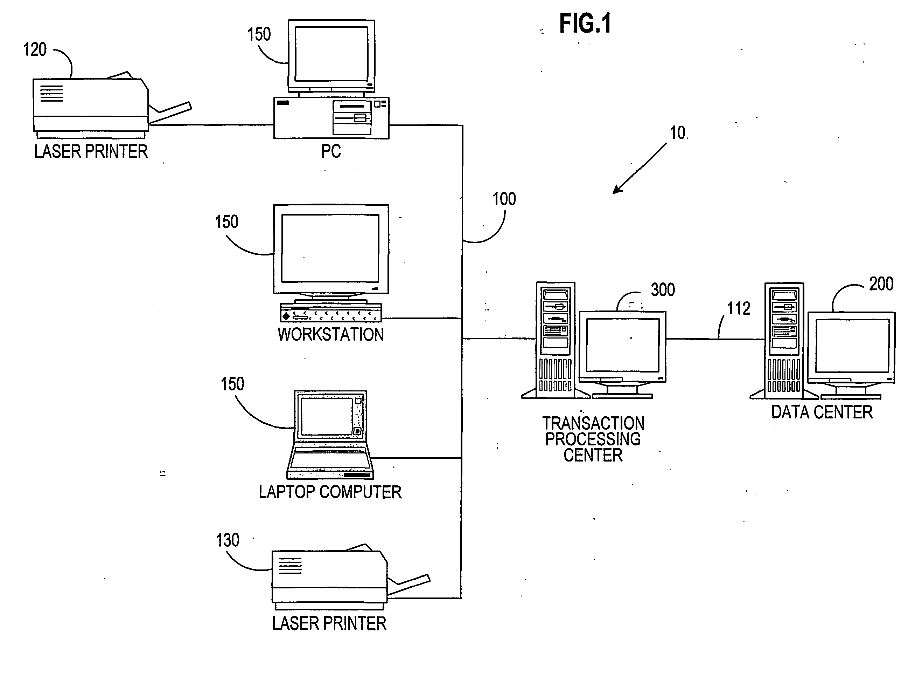

Referring to Fig. 1, an example of a transaction evidencing system 10 indicative of one example of an electronic commerce environment in which the present invention may be incorporated is shown. Generally, the transaction evidencing system 10 includes a data center 200 in communication over any suitable communication network 112 (LAN, WAN, telephone line, Internet, etc.) with a plurality of transaction processing centers 300, which in turn are in communication over any suitable communication network 100 (LAN, WAN, telephone line, Internet, etc.) with a plurality of remotely located computers 150. The present invention is suitable for various computer systems operating as computers 150 communicating over a network. For example, computers 150 may be personal computers at home, workstations in an office, kiosks or ATMs in a mall, or cash registers in a retail store. Alternatively, the present invention may be implemented with a direct dial connection between computers 150 and one of the transaction processing centers 300 (not shown). It is anticipated that when computers 150 are located in small business offices and/or in private residences, computers 150 would be used for a variety of purposes including purchasing tickets, purchasing gift certificates and purchasing goods and services. The transaction processing centers 300 and data center 200 are separately maintained and operated by a content provider, such as a merchant, a service provider or a third party transaction brokering service. The computers 150 may be connected directly to a printer 120 or have access to a printer 130 over the suitable communication network 100. Those skilled in the art will recognize that not each computer 150 need utilize the same network 100 in contacting the transaction processing centers 300. Likewise, the computer 150 may use one type of network 100 with the transaction processing centers 300 and a different type of network with the printer 130. The remotely located computers 150 are representative of users wanting to print transaction evidencing documents as evidence of an electronic transaction.

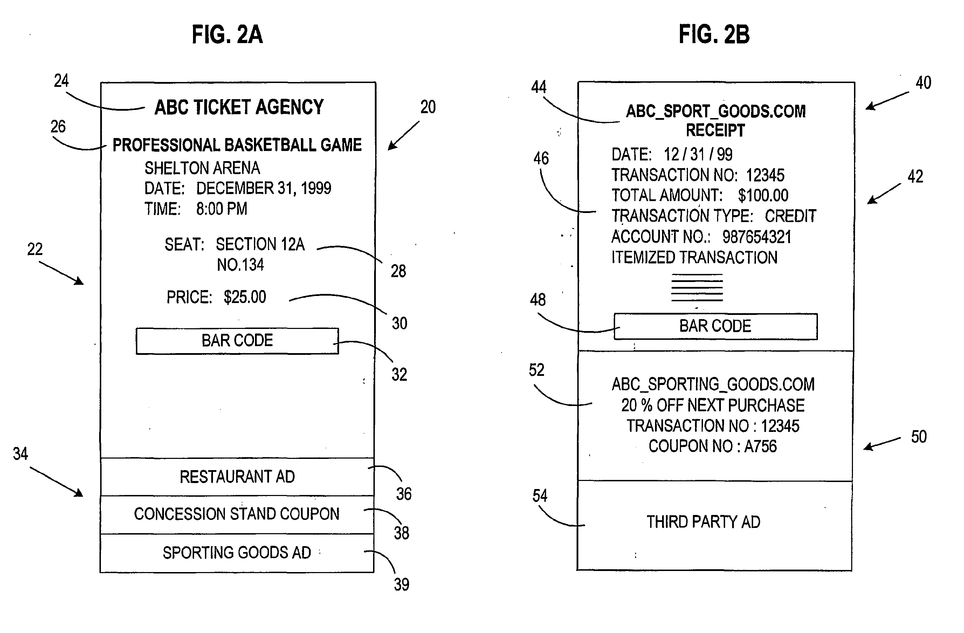

Referring now to Fig. 2A, an example of a transaction evidencing document, generally designated 20, is in the form of a ticket to a sporting event. Transaction evidencing document 20 includes a ticket section generally designated 22, comprising the identification of the ticketing party 24, identification of the event 26, location of the seats 28, price 30 and a bar code 32 that includes cryptographic validation information for authenticating the ticket. Transaction evidencing document 20 further includes an advertising section, generally designated 34 in which one or more advertisements may be printed. In Fig. 2A, a restaurant ad 36 for a restaurant local to the sporting event, a coupon 38 for a concession stand at the sporting event, and a national sporting goods ad 39 are printed with the ticket. It will be understood that the advertisers may find it desirable to have the advertisements placed at certain locations within transaction evidencing document 20 so that the user's attention may be more likely directed to the advertisement.

Referring now to Fig. 2B, another example of a transaction evidencing document, generally designated 40, in the form of a receipt for an electronic transaction to purchase a product or service. The transaction evidencing document 40 includes a receipt section, generally designated 42, comprising an identification of the merchant 44 that is selling the product or service, transaction information 46 and a bar code 48 that includes cryptographic validation information for authenticating the payment for the product or service. The transaction information includes a transaction number, amount of the transaction, transaction type, account number and an itemized listing of the transaction. The transaction evidencing document 40 further includes an advertising section, generally designated 50, in which one or more advertisements may be printed. In Fig. 2B, a coupon 52 that is good for future purchases from the merchant includes a discount amount, the transaction number and a coupon number. When using coupon 52 for a subsequent purchase, entry of the transaction number and coupon number may be enough to validate the coupon. Additional limitations may be added to prevent misuse of the coupon. For example, the coupon may be considered valid only if used in conjunction with the particular user identification or a particular credit card number. Also shown in Fig. 2B, is a third party ad 54 that is targeted to the user, for example by the credit card issuer that is performing the transaction.

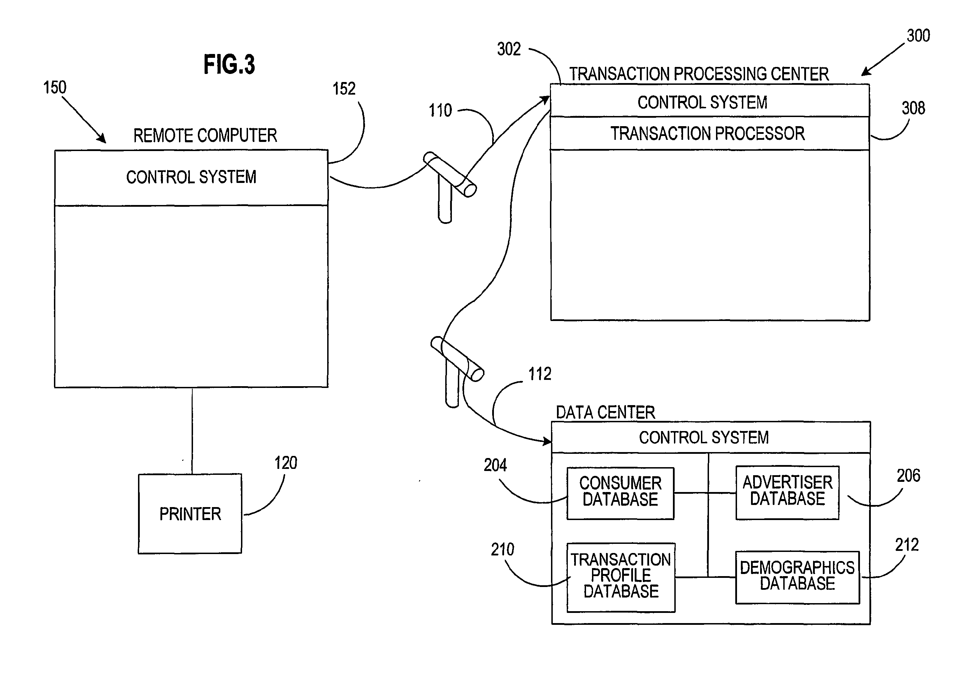

Referring now to Fig. 3, a detailed schematic of the transaction evidencing system 10 is shown. The remote computer 150 includes a control system 152 that is in communication over a suitable communication network 110, such as: telephone lines, public and private network systems (Internet) or the like; with a control system 302 of transaction processing center 300. Transaction processing system 300 may be based on any conventional computer based platform (PC, server, workstation, mainframe or the like) and includes a transaction evidencing processor 308 and control system 302.

Control system 302 of transaction processing system 300 is in communication over a suitable communication network 112, such as: telephone lines, public and private network systems (Internet) or the like; with a control system 202 from the data center 200. The data center 200 may be based on any conventional computer based platform (PC, server, workstation, mainframe or the like) and includes the control system 202, a user database 204, an advertiser database 206, a transaction profiling database 210 and a demographics database 212, all of which are in operative communication with each other using conventional means.

In preferred embodiment of the present invention, all of these databases reside at a third party data center operated by, for example, a credit card processor, a party operating other data centers, such as Pitney Bowes Inc., Stamford, Connecticut, USA or the merchant soliciting the transaction. In a second embodiment, a subset of these databases may reside at one or more data centers operated by one or more of such parties whereby the completion of the advertising function is shared by the data centers.

The user database 204 contains information concerning individual user accounts, such as: user name, user address, preferred payment vehicle or arrangements (periodic invoice, direct credit card authorization, electronic funds transfer, etc.), and the like, that have been established with data center 200. Similarly, the advertiser database 206 contains information concerning individual advertiser accounts, such as: advertiser name, advertiser address, preferred payment vehicle or arrangements (periodic invoice, direct credit card authorization, electronic funds transfer, etc.), ad data and the like, that have been established with the data center 200. The transaction profile database 210 may employ any suitable database containing statistics relevant to certain types of transactions. Examples of these statistics include: value of transaction, category of transaction (e.g., concert ticket, article purchase, gift certificate), frequency of transaction, history of users that have made similar transactions, location of event related to transaction (e.g., airline ticket departure and destination, concert location). The demographics database 212 may employ any suitable database containing statistics relevant to certain parameters, such as geographic locations and spending habits. As examples, various databases exist that contain detailed demographic information by zip code, such as: PRIZM available from Claritas Inc. (see Internet URL www.claritas.com), United States census information or any other database that is generally known and commercially available. Databases that profile user spending habits and purchase history are commonly maintained by credit card issuers.

The transaction evidencing processor 308 accurately records, tracks and accounts for the payment received or billed for an electronic transaction that results in a transaction evidencing document being printed. In the preferred environment, the transaction evidencing processor 308 is operated by the content provider (e. g. an airline selling tickets which a user can print). In an alternative environment, a third party, such as the third party operating data center 200 may operate transaction evidencing processor 308 for one or more content providers. This has the added benefit that the third party can pool the data from multiple content providers to produce more complete databases which result in more targeted advertising. In yet another environment, a third party may operate the databases used for ad selection as a service to the content providers.

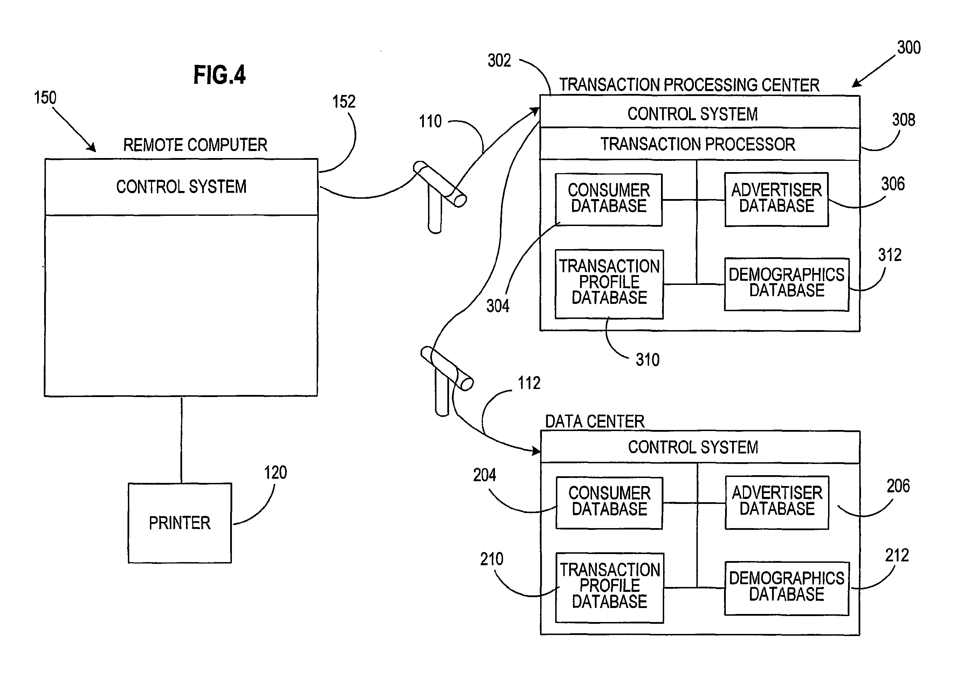

Referring now to Fig. 4, in an alternate embodiment transaction processing system 300 further includes a user database 304, an advertiser database 306, a transaction profile database 310 and a demographics database 312, all of which are in operative communication with each other using conventional means. Periodically, information from the corresponding databases in data center 200 may be downloaded at least in part such that transaction processing center 300 performs the target advertising process without the need for communicating with data center 200 for every electronic transaction.

It will be understood that data center 200 and transaction processing center 300 may be co-located.

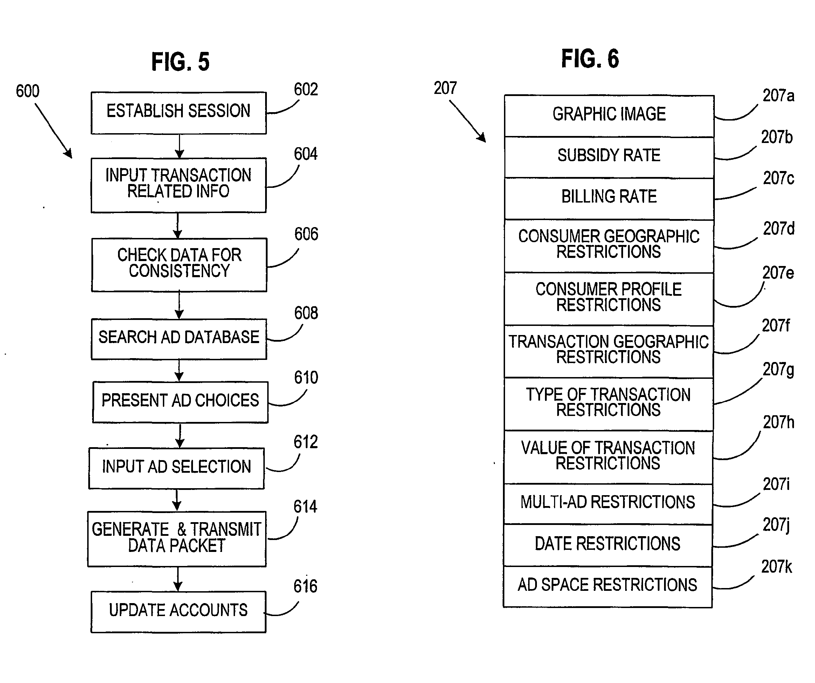

With the structure of the transaction evidencing system 10 described as above, the operational characteristics will now be described with respect to a typical transaction conducted between the remote computer 150 and the data center 200. Referring now primarily to Fig. 5 while referencing the structure of Figs. 1,2 and 3 or 4, a flow chart of a transaction routine 600 in accordance with the present invention is shown. The transaction routine 600 may be comprised of any suitable combination of software, firmware and hardware subsystems executed by the remote computer control system 152 and the transaction processing center control system 302. Generally, the advertising activities of the data center 200 (or transaction processing center 300) are such that they may be fully automated. On the other hand, the remote computer 150 includes a suitable user interface (such as a display with keyboard having menu driven functionality) for communicating with the user. For the sake of clarity and brevity, it is assumed that the user maintains a valid account with the transaction processing center 300. This account may be established at the time of an initial transaction by the user. It is also assumed that the provider desires to include third party advertising with transaction evidencing documents. Finally, the following description is based on the transaction processing center 300 communicating with data center 200 for each electronic transaction. It will be understood that in the alternative embodiment, in which transaction processing center 300 maintains local databases that are updated and shared periodically through communications with data center 200, the steps describe as being carried out at data center 200 will be carried out at transaction processing center 300.

At 602, the transaction routine 600 commences when the remote computer 150 contacts transaction processing center 300 to establish a session for conducting a transaction. In this manner, the remote computer 150 and transaction processing center 300 recognize each other as authentic using any conventional authentication technique. This generally involves the user of the remote computer 150 establishing an SSL connection with transaction processing center 300. In this manner sensitive user information (credit card number, transaction details, user name, etc.) are not inadvertently disclosed to an unauthorized party. Once the session has been established, at 604, transaction processing center 300 obtains relevant data necessary to process an electronic transaction. This typically involves the user purchasing a product, requesting a service (document translation, grocery delivery, etc.) or document (ticket, gift certificate, magazine article, etc.) and transmitting at least a subset of transaction related information to transaction processing center 300. For example, in the case of a theater ticket, the user would select a desired show (theater location, date, and time), number of tickets and seat location and transmit this information to transaction processing center 300, which in turn sends this information to data center 200. (It will be understood that part of the transaction related information might not be transmitted since the data center 200 may obtain this information from transaction profiling database 210). Transaction processing center 300 may also require the user to provide additional information, such as the user's zip code, in order to provide more targeted advertising. Preferably, this is accomplished by having the user enter or select appropriate data fields in a menu screen before uploading to transaction processing center 300. Next, at 606, transaction processing center 300 checks the data received from the user for consistency. If the data received contains inconsistencies, then the user may be instructed to check the data and resubmit it.

Next, at 608, transaction processing center 300 sends at least some of the information received from computer 150 to data center 200, which then searches the third party advertiser database 206 for those advertisers that are interested in advertising in conjunction with the transaction evidencing document. For the reasons discussed above, not every third party advertiser may want to advertise in conjunction with every transaction evidencing document. Generally, this step involves reviewing an ad data profile 207 that is maintained in advertiser database 206 for each advertisement and comparing transaction related information and information from transaction profiling database 210 to ad data profile 207. Referring now to Fig. 6, a schematic representation of ad data profile file 207 associated with a third party message to be printed in conjunction with transaction evidencing document 20 (40) by the transaction evidencing system 10 is shown. The ad data includes: graphic image data 207a; subsidy rate data 207b; billing rate 207c and restriction data. The restriction data may include transaction restriction data and consumer restriction. Preferably, the consumer restriction data includes: geographic restriction data 207d, and consumer profile restriction data 207e (obtained from other purchases). Preferably, the transaction restriction data includes: geographic restriction data 207f, type of transaction restriction data 207g and value of transaction restriction data 207h.

The graphic image data 207a is representative of the desired message and may be stored in any manner of well known formats, such as: PDF, JPEG, GIF and the like. The subsidy rate data 207b includes information corresponding to the credit value that will be applied to the content provider's account, the billing rate 207c includes information corresponding to the amount charged to the advertiser's for advertising in conjunction with transaction evidencing document 20 (40). The billing rate data 207c also includes information corresponding to the debit value that will be applied to the third party advertiser's account in conjunction with printing of the third party message on transaction evidencing document 20 (40). The geographic restriction data 207d provides an indication of what geographic areas the third party advertiser wants to target. This may be manifested by a restriction on the provider location, event location, the user location or any combination of the three. The consumer restriction data 207e provides an indication of the target audience. For example, distinctions may be made between: users purchasing orchestra seats and users purchasing balcony seats, users that fly more than others and users that fly first class. Preferably, the commercial versus residential distinction may be obtained directly from the user during the transaction. Alternatively, this may also be accomplished by reviewing user database 204 for certain 'key words" indicative of company, such as: inc., incorporated, co., company and the like. As another example that may be used independent from or in combination with the example previously discussed, the demographics database 212 allows further targeting of messages. Generally, income, age and other demographic statistics are available for different regions of the country. Thus, a zip code provided by the user or related to the transaction (e.g., location of a theater, delivery address for groceries, etc.) may be cross referenced to the demographics database 212 and the resulting demographic statistics compared with the third party advertiser's requirements. For example, a luxury car manufacturer may only want its ads going to private residences from regions where the average income is above a predetermined threshold. The date restriction data 207i provides an indication of what dates the third party advertiser wants to advertise. For example, expiration dates could be established beyond which the message will not be dispensed. As another example, periodic cycles (first week of month, last week of month, on Mondays, 2 weeks before a holiday, etc.) could be established during which the message is available for printing. The multi-ad restriction data 207i provides an indication of whether or not the third party advertiser allows another third party advertiser to occupy other advertising space on transaction evidencing document 20 (40). The sentiment being that a multiplicity of messages will dilute the effectiveness of the individual messages versus if the individual messages were used singularly. If the third party advertiser allows other advertisers, then a reduced credit indicated in the subsidy rate data 207b and a reduced debit indicated in the billing rate data 207c might be applied when multiple messages are employed. The ad space restriction data 207k provides an indication of which ad zones (such as in Fig. 2A and Fig. 2B) the third party advertiser authorizes for use with the message. For example, a third party advertiser may wish to print an ad as part of a theater ticket, but not along side the ticket. Thus, the third party advertiser may exercise some control over where the message is printed. Similarly, as an option, the user may also be given a choice over which ad is printed. For example, a user purchasing a concert ticket may be given a choice between two or more restaurant coupons (ads) for restaurants near the concert. Those skilled in the art will recognize that the above described restriction data 207d through 207k may be utilized independently from each other or in any desired combination. Still other restrictions may be utilized, such as count limits. It should now be apparent that the messages that meet the restriction criteria and are available for printing represent a subset of the total number of messages that are potentially available.

Again referring primarily to Fig. 5 while referencing the structure of Figs. 1, 2, 3, 4 and 6, once the available messages are determined according to the restriction data described above, at 610, the relevant messages are sent to remote computer 150 for printing in conjunction with the transaction evidencing document 20 (40). At this point, several ads may be presented to the user on the remote computer 150 via the user interface. This provides the user with the opportunity to view and select the available messages. Next, at 612, if messages have been presented to the user for selection, the user selects a message for printing in conjunction with the transaction evidencing document 20 (40). It will be understood that such user selection would be available in a small office/home office environment where the user conducts the transaction using a personal computer. Otherwise, at 612, the data center selects the message for printing. It will be understood that the data center selection would likely occur automatically in transactions conducted at retail stores.

For the sake of clarity and brevity, a description is provided where only one message 36 (52) is selected for printing in advertising section 34 (50) of transaction evidencing document 20 (40). However, those skilled in the art will recognize that, as described above, multiples messages may be printed. Next, at 614, the transaction processing center 300 generates a print data packet to be downloaded to the remote computer 150 for use in printing the transaction evidencing document 20 (40) and the selected message 36 (52). The print data packet also contains graphic information necessary to print the selected message 36 (52). Once the data packet has been received, the user can print the transaction evidencing document and ad using printer 120. Next, at 616, data center 200 (or transaction processing center 300 as the case may be) updates the user account to reflect the transaction information, such as: the date, the type of transaction, the selected message 36 (52), any fees associated with providing the above described services and any other relevant data. Similarly, the data center 200 (or transaction processing center 300 as the case may be) updates the selected third party advertiser's account to reflect the transaction information, such as: the date, the selected message (52), the corresponding advertising fee, any additional fees associated with providing the above described services and any other relevant data. The data center 200 (or transaction processing center 300 as the case may be) also updates the transaction profile database based upon transaction and user data, such as: user zip code, type of purchase, etc. Either concurrent with the transaction or later, the data center 200 (or transaction processing center 300 as the case may be) exercises the preferred payment vehicle for the user and the selected third party advertiser, respectively.

Based on the above description and the associated drawings, it should now be apparent that the present invention improves the ability of third party advertisers to reach more efficiently their target audience through advertising in conjunction with transaction evidencing documents.

Many features of the preferred embodiments represent design choices selected to best exploit the inventive concept as implemented in a particular electronic commerce environment. However, those skilled in the art will recognize that various modifications can be made without departing from the spirit of the present invention. For example, the transaction profiling database 210 and the third party advertiser database 206 may be resident at remote computer 150. Thus, a portion of the functionality of the data center 200 described above would be off loaded to remote computer 150. Remote computers 150 could then periodically receive updated information concerning transaction profiling 210 and third party advertiser database 206 by any conventional means. This might be the case if the remote computer 150 were, for example, a ticketing kiosk in a train station or a cash register in a retail store. Thus, those skilled in the art will recognize that there are many ways to distribute the functionality described above between the data center 200 and the remote computer 150. As yet another example, different billing rates may be applied for multi-color versus mono-color printing capability.

Therefore, the inventive concept in its broader aspects is not limited to the specific details of the preferred embodiments described above, but is defined by the appended claims and their equivalents.

## Claims

1. A transaction evidencing system (10), comprising:
a first processor (150) in operative communication with a printer (120) for printing a document as part of an electronic transaction undertaken by a consumer respecting content provided by a content provider;
a transaction processor (308) in operative communication with the first processor (150), the transaction processor for processing electronic transactions respecting content provided by a plurality of content providers;
a data center (200) in operative communication with the transaction processor (308), the first processor being located remotely from the data center and the transaction processor, the data center including a data center processor for processing a plurality of advertiser accounts, each of the plurality of advertiser accounts including respective ad data having message data and restriction data, each of the message data representative of a message, respectively, for printing on the document; the data center further including profile information about the consumer obtained during at least one prior electronic transaction in respect of content provided by at least one of the plurality of content providers;
a control system (302) in operative communication with the transaction processor, the data center processor and the first processor for:
establishing a transaction session between the first processor and the transaction processor, for the electronic transaction at the first processor;
obtaining the profile information;
using the profile information and the restriction data from the plurality of advertiser accounts to identify a subset of messages available for printing on the document; and
sending to the first processor data relating to the electronic transaction and at least one of the subset of messages to be printed with the document.

2. The system of claim 1, wherein the control system is further arranged to communicate a data packet to the first processor, the data packet including first data indicative of a transaction portion of the document and second data indicative of the selected message.

3. The system of claim 2, wherein the first processor is arranged to utilize the data packet to cause the printer to print the selected message in conjunction with evidence of the transaction on the document.

4. The system of claim 1 wherein the control system is further arranged to use information included as part of the electronic transaction along with the profile information and the restriction data to identify the subset of messages available for printing on the document.

5. The system of claim 1 wherein the electronic transaction is a credit card transaction and the control system is arranged to obtain said profile information from records maintained for a credit card account of the consumer.

6. The system of claim 5 wherein the transaction processor is also arranged to process the credit card account.

7. The system of claim 5 wherein the third processor is also arranged to process the credit card account.

8. The system of claim 1 wherein the data center and the transaction processor are arranged to operate at one location.

9. The system of claim 1 wherein the transaction processor is arranged periodically to obtain information from the plurality of advertiser accounts maintained at the data center for use during the electronic transaction.

10. The system of claim 1 wherein the transaction processor is arranged to obtain specific information needed from the plurality of advertiser accounts from the data center during the processing of the electronic transaction.

11. The system of claim 1, wherein the control system is further arranged for receiving from the consumer an indication of at least one selected message from the subset of messages that the consumer authorizes for printing on the document.

12. The system of claim 1, wherein the control system is further arranged for receiving from a credit card vendor a selection of said at least one of the subset of messages to be printed with the document.

13. The system of claim 1, wherein the control system is further arranged for selecting said at least one of the subset of messages to be printed with the document based on at least one of the type and content of the electronic transaction.

14. The system of claim 11, wherein the control system is further arranged for:
applying a debit to the advertiser account corresponding to the selected message; and
applying a credit of up to the amount of the debit to at least one of a content provider, a service provider, a transaction processing center operator and a data center operator for the electronic transaction.

15. The system of claim 14, wherein each of the restriction data, respectively, includes consumer restriction data and non-consumer restriction data.

16. The system of claim 15, wherein the consumer restriction data, respectively, includes at least information relating to one of the following:
commercial/residential restrictions; demographic restrictions and geographic restrictions.

17. The system of claim 15, wherein:
the document includes a plurality of ad space zones; and
the non-consumer restriction data, respectively, includes at least information relating to one of the following: transaction count restrictions; multi-ad restrictions; date restrictions; ad space zone restrictions and budget restrictions.

18. A method of operating a transaction evidencing system, the system including a first processor in operative communication with a printer for printing a document as part of an electronic transaction undertaken by a consumer respecting content provided by a content provider, a transaction processor in operative communication with the first processor for processing electronic transactions respecting content provided by a plurality of content providers, and a data center in operative communication with the transaction processor, the first processor being located remotely from the data center and the transaction processing center, the data center including a third processor for processing a plurality of advertiser accounts, each of the plurality of advertiser accounts including respective ad data having message data and restriction data, each of the message data representative of a message, respectively, for printing on the document; the data center further including profile information about the consumer obtained during at least one prior electronic transaction in respect of content provided by at least one of the plurality of content providers; the method comprising the steps of:
establishing a transaction session between the first processor and the transaction processor for the electronic transaction initiated by the consumer;
obtaining the profile information; and
using the profile information and the restriction data from the plurality of advertiser accounts to identify a subset of messages available for printing on the document.

19. The method of claim 18, further comprising the step of:
sending to the first processor data relating to the electronic transaction and at least one of the subset of messages to be printed with the document.

20. The method of claim 19, further comprising at least one of the steps of:
applying a debit to the advertiser account corresponding to the selected message; and
applying a credit of up to the amount of the debit to at least one of a content provider, a service provider, a transaction processing center operator and a data center operator for the electronic transaction.

21. The method of claim 20, wherein each of the restriction data, respectively, includes consumer restriction data and non-consumer restriction data.

22. The method of claim 21, wherein the consumer restriction data, respectively, includes at least information relating to one of the following:
commercial/residential restrictions; demographic restrictions and geographic restrictions.

23. The method of claim 22, wherein the document includes a plurality of ad space zones; and the non-consumer restriction data, respectively, includes at least information relating to one of the following: transaction count restrictions; multi-ad restrictions; date restrictions; ad space zone restrictions and budget restrictions.

24. A method of operating a transaction processing center, the transaction processing center in operative communication with a data center and a first processor, the data center including a second processor for processing a plurality of advertiser accounts, each of the plurality of advertiser accounts including respective ad data having message data and restriction data, each of the message data representative of a message, respectively, for printing on the document; the data center further including profile information about a consumer obtained during at least one prior electronic transaction in respect of content provided by at least one of a plurality of content providers; the first processor being remote from the data center and the transaction processing center and including a printer for printing a message on a document evidencing an electronic transaction to be undertaken by the consumer respecting content provided by one of the content providers, the method comprising the steps of:
maintaining a server for processing electronic transactions respecting content provided by the plurality of content providers;
obtaining information relating to the plurality of advertiser accounts;
establishing a transaction session with the first processor respecting content provided by one of the content providers;
receiving information included as part of the electronic transaction from the consumer; and
using the profile information, the information included as part of the electronic transaction and the restriction data from the plurality of advertiser accounts to identify a subset of messages available for printing on the document.

25. The method of claim 24, further comprising the step of: receiving from a consumer an indication of a selected message from the subset of messages that the consumer authorizes for printing on the document.

26. The method of claim 25, further comprising the steps of: applying a debit to the advertiser account corresponding to the selected message; and applying a credit of up to the amount of the debit to at least one of a content provider, a service provider, a transaction processing center operator and a data center operator for the electronic transaction.

27. The method of claim 26, wherein each of the restriction data, respectively, includes consumer restriction data and non-consumer restriction data.

28. The method of claim 27, wherein the consumer restriction data, respectively, includes at least information relating to one of the following:
commercial/residential restrictions; demographic restrictions and geographic restrictions.

29. The method of claim 28, wherein: the document includes a plurality of ad space zones; and the non-consumer restriction data, respectively, includes at least information relating to one of the following: transaction count restrictions; multi-ad restrictions; date restrictions; ad space zone restrictions and budget restrictions.

## Patentansprüche

1. Transaktionsnachweissystem (10) mit:
einem ersten Prozessor (150) in wirksamer Kommunikation mit einem Drucker (120) zum Drucken eines Dokuments als Teil einer elektronischen Transaktion, die durch einen Verbraucher betreffs eines durch einen Inhalt-Provider bereitgestellten Inhalts unternommen ist;
einem Transaktionsprozessor (308) in wirksamer Kommunikation mit dem ersten Prozessor (150), wobei der Transaktionsprozessor für ein Verarbeiten elektronischer Transaktionen betreffs eines durch eine Vielzahl von Inhalt-Providern bereitgestellten Inhalts ist;
einer Datenzentrale (200) in wirksamer Kommunikation mit dem Transaktionsprozessor (308), wobei der erste Prozessor sich von der Datenzentrale und dem Transaktionsprozessor entfernt befindet, wobei die Datenzentrale einen Datenzentralen-Prozessor zum Verarbeiten eine Vielzahl von Werbetreibender-Konten enthält, wobei jedes von der Vielzahl von Werbetreibender-Konten jeweils Anzeigendaten mit Nachrichtendaten und Beschränkungsdaten enthält, wobei jede von den Nachrichtendaten jeweils eine Nachricht zum Drucken auf dem Dokument darstellt; wobei die Datenzentrale ferner eine Profilinformation über den Konsumenten enthält, die während wenigstens einer früheren elektronischen Transaktion bezüglich eines Inhalts erhalten ist, der durch wenigstens einen von der Vielzahl von Inhalt-Providern bereitgestellt ist;
einem Steuersystem (302) in wirksamer Kommunikation mit dem Transaktionsprozessor, dem Datenzentralen-Prozessor und dem ersten Prozessor zum:
Errichten einer Transaktionssitzung zwischen dem ersten Prozessor und dem Transaktionsprozessor für die elektronische Transaktion bei dem ersten Prozessor;
Erhalten der Profilinformation;
Verwenden der Profilinformation und der Beschränkungsdaten von der Vielzahl von Werbetreibender-Konten, um eine Untermenge von Nachrichten zu identifizieren, die zum Drucken auf dem Dokument verfügbar sind; und
Senden, an den ersten Prozessor, von Daten mit Bezug zu der elektronischen Transaktion und wenigstens einer von der Untermenge von mit dem Dokument zu druckenden Nachrichten.

2. System von Anspruch 1, wobei das Steuersystem ferner eingerichtet ist zum Kommunizieren eines Datenpakets an den ersten Prozessor, wobei das Datenpaket erste Daten, die ein Transaktionsteilstück des Dokuments angeben, und zweite Daten enthält, die die ausgewählte Nachricht angeben.

3. System von Anspruch 2, wobei der erste Prozessor eingerichtet ist zum Nutzen des Datenpaketes, um den Drucker zu veranlassen, die ausgewählte Nachricht in Verbindung mit dem Nachweis der Transaktion auf dem Dokument zu drucken.

4. System von Anspruch 1, wobei das Steuersystem ferner eingerichtet ist zum Verwenden einer Information, die als Teil der elektronischen Transaktion enthalten ist, zusammen mit der Profilinformation und den Beschränkungsdaten, um die Untermenge von Nachrichten zu identifizieren, die zum Drucken auf dem Dokument verfügbar sind.

5. System von Anspruch 1, wobei die elektronische Transaktion eine Kreditkarten-Transaktion ist und das Steuersystem eingerichtet ist zum Erhalten der Profilinformation von für ein Kreditkartenkonto des Verbrauchers aufrecht erhaltenen Datensätzen.

6. System von Anspruch 5, wobei der Transaktionsprozessor außerdem zum Verarbeiten des Kreditkartenkontos eingerichtet ist.

7. System von Anspruch 5, wobei der dritte Prozessor außerdem zum Verarbeiten des Kreditkartenkontos eingerichtet ist.

8. System von Anspruch 1, wobei die Datenzentrale und der Transaktionsprozessor zum Arbeiten an einem Ort eingerichtet sind.

9. System von Anspruch 1, wobei der Transaktionsprozessor eingerichtet ist zum periodischen Erhalten einer Information von der Vielzahl von Werbetreibender-Konten, die bei der Datenzentrale aufrecht erhalten ist, zur Verwendung während der elektronischen Transaktion.

10. System von Anspruch 1, wobei der Transaktionsprozessor eingerichtet ist zum Erhalten einer spezifischen Information, die von der Vielzahl von Werbetreibender-Konten benötigt wird, von der Datenzentrale während der Verarbeitung der elektronischen Transaktion.

11. System von Anspruch 1, wobei das Steuersystem ferner eingerichtet ist zum Empfangen, von dem Verbraucher, einer Angabe von wenigstens einer ausgewählten Nachricht aus der Untermenge von Nachrichten, die der Verbraucher zum Drucken auf das Dokument autorisiert.

12. System von Anspruch 1, wobei das Steuersystem ferner eingerichtet ist zum Empfangen, von einem Kreditkartenhersteller, einer Auswahl von der wenigstens einen von der Untermenge von Nachrichten, die mit dem Dokument zu drucken sind.

13. System von Anspruch 1, wobei das Steuersystem ferner eingerichtet ist zum Auswählen der wenigstens einen von der Untermenge von Nachrichten, die mit dem Dokument zu drucken ist, auf Grundlage von wenigstens dem Typ oder dem Inhalt der elektronischen Transaktion.

14. System von Anspruch 11, wobei das Steuersystem ferner eingerichtet ist zum:
Anwenden einer Kontobelastung auf das Werbetreibender-Konto, das der ausgewählten Nachricht entspricht; und
Anwenden eines Guthabens bis zu der Höhe der Kontobelastung für wenigstens einen von einem Inhalts-Provider, einem Dienst-Provider, einem Transaktionsverarbeitungszentralen-Operator oder einem Datenzentralen-Operator für die elektronische Transaktion.

15. System von Anspruch 14, wobei jede der Beschränkungsdaten jeweils Verbraucherbeschränkungsdaten und Nicht-Verbraucherbeschränkungsdaten enthält.

16. System von Anspruch 15, wobei die Verbraucherbeschränkungsdaten jeweils wenigstens eine Information mit Bezug zu einem der folgenden enthalten:
Geschäfts-/Wohnviertel-Beschränkungen; demographische Beschränkungen oder geographische Beschränkungen.

17. System von Anspruch 15, wobei:
das Dokument eine Vielzahl von Anzeigenraumzonen enthält; und
die Nicht-Verbraucherbeschränkungsdaten jeweils wenigstens eine Information mit Bezug zu einem der folgenden enthalten: Transaktionszählbeschränkungen; Multi-Anzeigen-Beschränkungen; Datums-Beschränkungen; Anzeigenraumzonen-Beschränkungen und Budget-Beschränkungen.

18. Verfahren zum Betreiben eines Transaktionsnachweissystems, wobei das System einen ersten Prozessor in wirksamer Kommunikation mit einem Drucker zum Drucken eines Dokuments als Teil einer elektronischen Transaktion, die von einem Verbraucher unternommen ist, betreffs eines durch einen Inhalts-Provider bereitgestellten Inhalts, einen Transaktionsprozessor in wirksamer Kommunikation mit dem ersten Prozessor zum Verarbeiten elektronischer Transaktionen betreffs eines durch eine Vielzahl von Inhalts-Providern bereitgestellten Inhalts und eine Datenzentrale in wirksamer Kommunikation mit dem Transaktionsprozessor enthält, wobei der erste Prozessor sich entfernt von der Datenzentrale und der Transaktionsverarbeitungszentrale befindet, wobei die Datenzentrale einen dritten Prozessor zum Verarbeiten einer Vielzahl von Werbetreibender-Konten enthält, wobei jedes von der Vielzahl von Werbetreibender-Konten jeweils Anzeigendaten mit Nachrichtendaten und Beschränkungsdaten enthält, wobei jede der Nachrichtendaten jeweils eine Nachricht zum Drucken auf dem Dokument darstellt; wobei die Datenzentrale ferner eine Profilinformation über den Verbraucher enthält, die während wenigstens einer vorherigen elektronischen Transaktion erhalten ist, bezüglich eines durch wenigstens einen von der Vielzahl von Inhalt-Providern bereitgestellten Inhalts; wobei das Verfahren die Schritte umfasst zum:
Errichten einer Transaktionssitzung zwischen dem ersten Prozessor und dem Transaktionsprozessor für die durch den Konsumenten initiierte elektronische Transaktion; Erhalten der Profilinformation; und
Verwenden der Profilinformation und den Beschränkungsdaten von der Vielzahl von Werbetreibender-Konten, um eine Untermenge von Nachrichten zu identifizieren, die zum Drucken auf dem Dokument verfügbar sind.

19. Verfahren von Anspruch 18 mit ferner dem Schritt zum:
Senden, an den ersten Prozessor, von Daten mit Bezug zu der elektronischen Transaktion und zu wenigstens einer von der Untermenge von Nachrichten, die mit dem Dokument zu drucken sind.

20. Verfahren von Anspruch 19 mit ferner wenigstens einem der Schritte zum:
Anwenden einer Kontobelastung auf das Werbetreibender-Konto, das der ausgewählten Nachricht entspricht, und/oder
Anwenden eines Guthabens bis zu der Höhe der Kontobelastung auf wenigstens einen von einem Inhalt-Provider, einem Dienst-Provider, einem Transaktionsverarbeitungszentralen-Operator oder einem Datenzentralen-Operator für die elektronische Transaktion.

21. Verfahren von Anspruch 20, wobei jede der Beschränkungsdaten jeweils Verbraucherbeschränkungsdaten und Nicht-Verbraucherbeschränkungsdaten enthält.

22. Verfahren von Anspruch 21, wobei die Verbraucherbeschränkungsdaten jeweils wenigstens eine Information mit Bezug zu einem der folgenden enthalten: Geschäfts-/Wohnviertel-Beschränkungen; demographische Beschränkungen odre geographische Beschränkungen.

23. Verfahren von Anspruch 22, wobei das Dokument eine Vielzahl von Anzeigenraumzonen enthält; und die Nicht-Verbraucherbeschränkungsdaten jeweils wenigstens eine Information mit Bezug zu einem der folgenden enthalten: Transaktionszählbeschränkungen; Multi-Anzeigen-Beschränkungen; Datums-Beschränkungen; Anzeigenraumzonen-Beschränkungen oder Budget-Beschränkungen.

24. Verfahren zum Betreiben einer Transaktionsverarbeitungszentrale, wobei die Transaktionsverarbeitungszentrale in wirksamer Kommunikation mit einer Datenzentrale und einem ersten Prozessor ist, wobei die Datenzentrale einen zweiten Prozessor zum Verarbeiten einer Vielzahl von Werbetreibender-Konten enthält, wobei jedes von der Vielzahl von Werbetreibender-Konten jeweilige Anzeigendaten mit Nachrichtendaten und Beschränkungsdaten enthält, wobei jede von den Nachrichtendaten jeweils eine Nachricht zum Drucken auf dem Dokument darstellt; wobei die Datenzentrale ferner eine Profilinformation über einen Verbraucher enthält, die während wenigstens einer früheren elektronischen Transaktion erhalten ist, bezüglich eines durch wenigstens einen von einer Vielzahl von Inhalt-Providern bereitgestellten Inhalts; wobei der erste Prozessor entfernt von der Datenzentrale und der Transaktionsverarbeitungszentrale ist und einen Drucker zum Drucken einer Nachricht auf ein Dokument mit Nachweis einer elektronischen Transaktion enthält, die durch den Konsumenten vorzunehmen ist, bezüglich eines durch einen von den Inhalt-Providern bereitgestellten Inhalts, wobei das Verfahren die Schritte umfasst zum:
Aufrechterhalten eines Servers zum Verarbeiten elektronischer Transaktionen betreffs eines durch eine Vielzahl von Inhalt-Providern bereitgestellten Inhalts;
Erhalten einer Information mit Bezug zu der Vielzahl von Werbetreibender-Konten;
Errichten einer Transaktionssitzung mit dem ersten Prozessor betreffs eines durch einen der Inhalt-Provider bereitgestellten Inhalts;
Empfangen einer Information, die als Teil der elektronischen Transaktion enthalten ist, von dem Verbraucher; und
Verwenden der Profilinformation, der als Teil der elektronischen Transaktion enthaltenen Information und der Beschränkungsdaten von der Vielzahl von Werbetreibender-Konten, um eine Untermenge von Nachrichten zu identifizieren, die zum Drucken auf dem Dokument verfügbar sind.

25. Verfahren von Anspruch 24 mit ferner dem Schritt zum: Empfangen, von einem Verbraucher, einer Angabe einer ausgewählten Nachricht von der Untermenge von Nachrichten, die der Verbraucher zum Drucken auf dem Dokument autorisiert.

26. Verfahren von Anspruch 25 mit ferner den Schritten zum: Anwenden einer Kontobelastung auf das Werbetreibender-Konto, das der ausgewählten Nachricht entspricht; und Anwenden eines Guthabens bis zu der Höhe der Kontobelastung auf wenigstens einen von einem Inhalt-Provider, einem Dienst-Provider, einem Transaktionsverarbeitungszentralen-Operator oder einem Datenzentralen-Operator für die elektronische Transaktion.

27. Verfahren von Anspruch 26, wobei jede der Beschränkungsdaten jeweils Verbraucherbeschränkungsdaten und Nicht-Verbraucherbeschränkungsdaten enthalten.

28. Verfahren von Anspruch 27, wobei die Verbraucherbeschränkungsdaten jeweils eine Information mit Bezug zu einem der folgenden enthalten: Geschäfts-/Wohnviertel-Beschränkungen; demographische Beschränkungen oder geographische Beschränkungen.

29. Verfahren von Anspruch 28, wobei: das Dokument eine Vielzahl von Anzeigenraumzonen enthält; und die Nicht-Verbraucherbeschränkungsdaten jeweils wenigstens eine Information mit Bezug zu einem der folgenden enthalten: Transaktionszählbeschränkungen; Multi-Anzeigen-Beschränkungen; Datums-Beschränkungen; Anzeigenraumzonen-Beschränkungen und Budget-Beschränkungen.

## Revendications

1. Système (10) pour prouver une transaction, comportant :
un premier processeur (150) en communication fonctionnelle avec une imprimante (120) pour imprimer un document en tant que partie d'une transaction électronique entreprise par un consommateur concernant un contenu fourni par un fournisseur de contenus ;
un processeur (308) de transaction en communication fonctionnelle avec le premier processeur (150), le processeur de transaction étant destiné à traiter des transactions électroniques concernant un contenu fourni par de multiples fournisseurs de contenus ;
un centre (200) de données en communication fonctionnelle avec le processeur (308) de transaction, le premier processeur étant placé à distance du centre de données et du processeur de transaction, le centre de données comprenant un processeur de centre de données destiné à traiter de multiples comptes d'annonceurs, chacun des multiples comptes d'annonceurs comprenant des données publicitaires respectives ayant des données de message et des données de restriction, chacune des données de message étant représentative d'un message, respectivement, pour une impression sur le document ; le centre de données comprenant en outre une information de profil concernant le consommateur, obtenue pendant au moins une transaction électronique antérieure en référence au contenu fourni par au moins l'un des multiples fournisseurs de contenus ;
un système de commande (302) en communication fonctionnelle avec le processeur de transaction, le processeur du centre de données et le premier processeur pour :
établir une session de transaction entre le premier processeur et le processeur de transaction, pour la transaction électronique au premier processeur ;
obtenir l'information de profil ;
utiliser l'information de profil et les données de restriction provenant des multiples comptes d'annonceurs pour identifier un sous-ensemble de messages disponibles pour une impression sur le document ; et
envoyer au premier processeur des données concernant la transaction électronique et au moins l'un des messages du sous-ensemble pour une impression avec le document.

2. Système selon la revendication 1, dans lequel le système de commande est en outre agencé pour communiquer un paquet de données au premier processeur, le paquet de données comprenant une première donnée indicative d'une partie de transaction du document et une seconde donnée indicative du message sélectionné.

3. Système selon la revendication 2, dans lequel le premier processeur est agencé pour utiliser le paquet de données afin d'amener l'imprimante à imprimer le message sélectionné conjointement avec la preuve de la transaction sur le document.

4. Système selon la revendication 1, dans lequel le système de commande est en outre agencé pour utiliser une information incluse en tant que partie de la transaction électronique en même temps que l'information de profil et les données de restriction pour identifier le sous-ensemble de messages disponibles pour une impression sur le document.

5. Système selon la revendication 1, dans lequel la transaction électronique est une transaction par carte de crédit et le système de commande est agencé pour obtenir ladite information de profil à partir d'enregistrements conservés pour un compte de carte de crédit du consommateur.

6. Système selon la revendication 5, dans lequel le processeur de transaction est également agencé pour traiter le compte de la carte de crédit.

7. Système selon la revendication 5, dans lequel le troisième processeur est également agencé pour traiter le compte de la carte de crédit.

8. Système selon la revendication 1, dans lequel le centre de données et le processeur de transaction sont agencés pour fonctionner en un emplacement.

9. Système selon la revendication 1, dans lequel le processeur de transaction est agencé pour obtenir périodiquement une information à partir des multiples comptes d'annonceurs conservés au centre de données pour une utilisation pendant la transaction électronique.

10. Système selon la revendication 1, dans lequel le processeur de transaction est agencé pour obtenir du centre de données une information spécifique nécessaire aux multiples comptes d'annonceurs pendant le traitement de la transaction électronique.

11. Système selon la revendication 1, dans lequel le système de commande est en outre agencé pour recevoir du consommateur une indication d'au moins un message sélectionné parmi le sous-ensemble de messages que le consommateur autorise à imprimer sur le document.

12. Système selon la revendication 1, dans lequel le système de commande est en outre agencé pour recevoir d'un distributeur à carte de crédit une sélection dudit, au moins un, du sous-ensemble de messages devant être imprimé avec le document.

13. Système selon la revendication 1, dans lequel le système de commande est en outre agencé pour sélectionner ledit, au moins un, du sous-ensemble de messages devant être imprimé avec le document sur la base d'au moins l'un du type et du contenu de la transaction électronique.

14. Système selon la revendication 11, dans lequel le système de commande est en outre agencé pour :
appliquer un débit au compte de l'annonceur, correspondant au message sélectionné ; et
appliquer un crédit à hauteur du montant du débit à au moins l'un d'un fournisseur de contenus, d'un fournisseur de services, d'un opérateur de centre de traitement de transactions et d'un opérateur de centre de données pour la transaction électronique.

15. Système selon la revendication 14, dans lequel chacune des données de restriction, respectivement, comprend une donnée de restriction pour consommateur et une donnée de restriction pour non-consommateur.

16. Système selon la revendication 15, dans lequel la donnée de restriction pour consommateur, respectivement, comprend au moins une information ayant trait à l'un de ce qui suit : des restrictions commerciales/résidentielles ; des restrictions démographiques et des restrictions géographiques.

17. Système selon la revendication 15, dans lequel :
le document comprend de multiples zones d'espaces publicitaires ; et
les données de restriction pour non-consommateur comprennent, respectivement, au moins une information concernant l'un de ce qui suit : des restrictions de compte de transaction ; des restrictions multipublicitaires ; des restrictions de date ; des restrictions de zones d'espace publicitaire et des restrictions de budget.

18. Procédé pour faire fonctionner un système pour prouver une transaction, le système comprenant un premier processeur en communication fonctionnelle avec une imprimante pour imprimer un document en tant que partie d'une transaction électronique entreprise par un consommateur concernant un contenu procuré par un fournisseur de contenus, un processeur de transaction en communication fonctionnelle avec le premier processeur pour traiter des transactions électroniques concernant un contenu fourni par de multiples fournisseurs de contenus, et un centre de données en communication fonctionnelle avec le processeur de transaction, le premier processeur étant placé à distance du centre de données et du centre de traitement de transaction, le centre de données comprenant un troisième processeur destiné à traiter de multiples comptes d'annonceurs, chacun des multiples comptes d'annonceurs comprenant des données publicitaires respectives ayant des données de message et des données de restriction, chacune des données de message étant représentative d'un message, respectivement, pour une impression sur le document ; le centre de données comprenant en outre une information de profil concernant le consommateur, obtenue pendant au moins une transaction électronique antérieure concernant un contenu fourni par au moins l'un des multiples fournisseurs de contenus ; le procédé comprenant les étapes qui consistent à :
établir une session de transaction entre le premier processeur et le processeur de transaction, pour la transaction électronique amorcée par le consommateur ;
obtenir l'information de profil ; et
utiliser l'information de profil et les données de restriction provenant des multiples comptes d'annonceurs pour identifier un sous-ensemble de messages disponibles pour une impression sur le document.

19. Procédé selon la revendication 18, comprenant en outre l'étape qui consiste à :
envoyer au premier processeur des données concernant la transaction électronique et au moins l'un des messages du sous-ensemble pour une impression avec le document.

20. Procédé selon la revendication 19, comprenant en outre au moins l'une des étapes qui consistent à :
appliquer un débit au compte d'annonceur correspondant au message sélectionné ; et
appliquer un crédit à la hauteur du montant du débit à au moins l'un d'un fournisseur de contenus, d'un fournisseur de services, d'un opérateur de centre de traitement de transaction et d'un opérateur de centre de données pour la transaction électronique.

21. Procédé selon la revendication 20, dans lequel chacune des données de restriction, respectivement, comprend une donnée de restriction pour consommateur et une donnée de restriction pour non-consommateur.

22. Procédé selon la revendication 21, dans lequel la donnée de restriction pour consommateur, respectivement, comprend au moins une information ayant trait à l'un de ce qui suit : des restrictions commerciales/résidentielles ; des restrictions démographiques et des restrictions géographiques.

23. Procédé selon la revendication 22, dans lequel :
le document comprend de multiples zones d'espaces publicitaires ; et les données de restriction pour non-consommateur comprennent, respectivement, au moins une information ayant trait à l'un de ce qui suit : des restrictions de compte de transaction ; des restrictions publicitaires multiples ; des restrictions de date ; des restrictions de zones d'espace publicitaire et des restrictions de budget.

24. Procédé pour faire fonctionner un centre de traitement de transaction, le centre de traitement de transaction étant en communication fonctionnelle avec un centre de données et un premier processeur, le centre de données comprenant un deuxième processeur destiné à traiter de multiples comptes d'annonceurs, chacun des multiples comptes d'annonceurs comprenant des données publicitaires respectives ayant des données de message et des données de restriction, chacune des données de message étant représentative d'un message, respectivement, pour une impression sur le document ; le centre de données comprenant en outre une information de profil concernant un consommateur, obtenue pendant au moins une transaction électronique antérieure concernant un contenu fourni par au moins l'un de multiples fournisseurs de contenus ; le premier processeur étant éloigné du centre de données et du centre de traitement de transaction et comprenant une imprimante destinée à imprimer un message sur un document prouvant une transaction électronique devant être entreprise par le consommateur concernant un contenu fourni par l'un des fournisseurs de contenus, le procédé comprenant les étapes qui consistent à :
maintenir un serveur pour le traitement de transactions électroniques concernant un contenu fourni par les multiples fournisseurs de contenus ;
obtenir une information concernant les multiples comptes d'annonceurs ;
établir une session de transaction avec le premier processeur concernant un contenu fourni par l'un des fournisseurs de contenus ;
recevoir du consommateur une information incluse en tant que partie de la transaction électronique ; et
utiliser l'information de profil, l'information incluse en tant que partie de la transaction électronique et les données de restriction provenant des multiples comptes d'annonceurs pour identifier un sous-ensemble de messages disponibles pour une impression sur le document.

25. Procédé selon la revendication 24, comprenant en outre l'étape consistant à : recevoir d'un consommateur une indication d'un message sélectionné à partir du sous-ensemble de messages que le consommateur autorise à imprimer sur le document.

26. Procédé selon la revendication 25, comprenant en outre les étapes qui consistent à : appliquer un débit au compte d'annonceur correspondant au message sélectionné ; et appliquer un crédit à la hauteur du montant du débit à au moins un fournisseur de contenus, un fournisseur de services, un opérateur de centre de traitement de transaction et un opérateur de centre de données pour la transaction électronique.

27. Procédé selon la revendication 26, dans lequel chacune des données de restriction, respectivement, comprend une donnée de restriction pour consommateur et une donnée de restriction pour non-consommateur.

28. Procédé selon la revendication 27, dans lequel la donnée de restriction pour consommateur, respectivement, comprend au moins une information ayant trait à l'un de ce qui suit : des restrictions commerciales/résidentielles ; des restrictions démographiques et des restrictions géographiques.

29. Procédé selon la revendication 28, dans lequel :
le document comprend de multiples zones d'espaces publicitaires ; et la donnée de restriction pour non-consommateur, respectivement, comprend au moins une information ayant trait à l'un de ce qui suit : des restrictions de compte de transaction ; des restrictions publicitaires multiples ; des restrictions de date ; des restrictions de zones d'espace publicitaire et des restrictions de budget.
